# EUROPEAN PATENT APPLICATION

(11) **EP 2 045 175 A2**
(43) Date of publication of application: **08.04.2009**
(21) Application number: 08165478.2
(22) Date of filing: 30.09.2008
(51) Int. Cl.: B62D 55/08, B62D 55/32

(54) **Track shoe assembly for light tracked vehicle**

(30) Priority: 04.10.2007 TH 503407
(71) Applicant: Chaiseri Metal & Rubber Co., Ltd., 12140 Pathumtanee (TH)
(72) Inventor: Kitti, Kunhiran c/o Chaiseri Metal&Rubber Co.,Ltd, Ladlumkaew 12140 Pathumtanee (TH)
(74) Representative: Bentz, Jean-Paul

(57) **Abstract**

The present invention related to the track shoe assembly for tracked vehicle. More specifically, the present invention related to the track shoe assembly for light tracked vehicle. The track shoe assembly (10) of the present invention is a double guide member, having rubber bushing type (15). The rubber pad (40) track is a replace able, non-directional type having large contact surface between the ground and the rubber pad. The track shoe assembly according to the present invention is durable. The weight is reduced by using rubber in place of a single solid steel. Thus, the service life is expanded and fuel consumption is reduced. In addition, only the failure part can be replaced instead of replacing the entire track shoe assembly. Therefore, reduces maintenance cost and time.

## Description

### FIELD OF THE INVENTION

This application related to track shoe assembly for light tracked vehicle.

### BACKGROUND OF THE INVENTION

Military weapons such as artillery and projectiles having been continuously developed to increase their destructive power. On the contrary, armour for vehicle is also continuously being developed to increase their resistance to the destructive power of such weapons. When both developed weapon and armour are installed on a tracked vehicle, the increase of the overall weight of the vehicle is, hence, inevitable. Such increase in the vehicle weight demands a higher power engine and an upgraded gear box that can transmit higher horse powers. This demand further increases the overall weight of the original vehicle while the ground contact surface area of the track which distributes the overall weight of the vehicle to the ground is still constant. The outcome is that the ground pressure (the force that acts on the road surface per unit area) highly increases. Therefore, there is a need for a track shoe assembly being developed to have high efficiency for such highly increased work load.

The existing track shoe for light tracked vehicle, e.g. the track shoe of French light armour vehicle model AMX13, is manufactured from molding cast steel having high specific gravity (sp. gr. = 7.85). When any part of the shoe wear out, all the assembly set of the track shoe has to be replaced. This is due to the following problems.

The first problem is the said track shoe assembly is a double guide, single pin, having no rubber bushing type track shoe assembly. This type of track shoe assembly generates noise and vibration due to the friction between the pin hole of the track shoe (which is made from cast iron) and the pin that connect the adjacent track shoe assembly together. Such friction causes wear out until the circular pin hole of the track shoe becomes an oval shape and the entire track shoe assembly has to be replaced.

The second problem is the sprocket wheel drives only at the window of the housing of the track shoe body of the said track shoe assembly. When the housing wear out up to a point, the entire track shoe assembly has to be replaced.

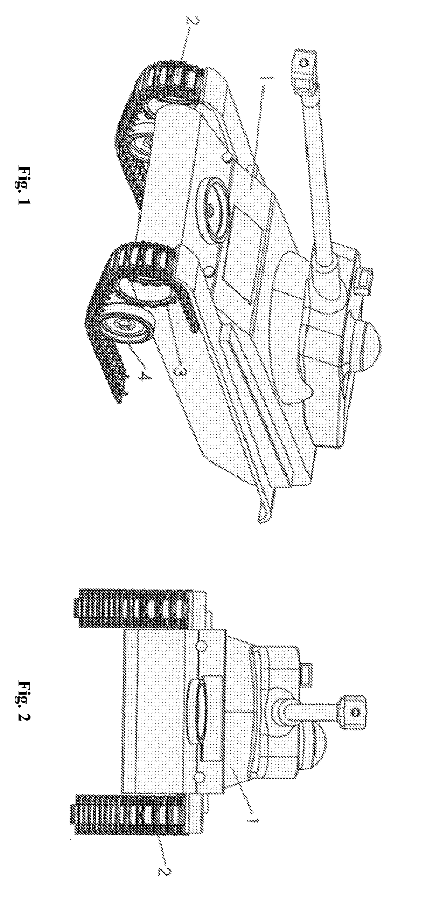

The track shoe for light track vehicle, such as the track vehicle shown in figure 1, is the double guide, single pin, having no rubber bushing with directional rubber pad type. In addition, the shapes of the track shoe and the rubber pad is asymmetry. These asymmetry shapes leave moving direction footprint of the vehicle when the vehicle run on the road/terrain, thus makes the tracking of the vehicle easily and not suitable for strategic deployment in warfare scenarios. In addition, the small contact surface area between the rubber pads and the road surface causes instability of the moving of the vehicle as well as too much force acts on the road surface which is not suitable for the present developed tracked vehicle.

The conventional track shoe assembly is manufactured by forging. If one needs to manufacture by forging, a large forging machine having force more than 4,000 tons is required. The requirement of such machine means high investment.

The present invention is provided to solve all of the above mentioned problems of the prior art. The track shoe assembly of the present invention is a double guide, double pin with rubber bushing type. The track shoe assembly of the present invention also has end connector that connects the adjacent track shoes together. Such connector design provides a strong and easy-maintenance connector. When failure occurs at any part of the track shoe assembly, only that failure part needs to be replaced rather than the entire track shoe assembly. This leads to lower maintenance cost and less maintenance time.

The present invention relates to the track shoe assembly of the light tracked vehicle. More specifically, the present invention relates to a double guide, double pin with rubber bushing type track shoe assembly of the light tracked vehicle. The track shoe assembly of the present invention also has end connector that connects the adjacent track shoes together. The rubber pad of the present track shoe assembly is a non-directional type suitable for strategic deployment and can be used in all terrain.

An objective of the present invention is to use rubber (sp. gr 1.14) which is lighter than steel (sp. gr. 7.85) in several non-major components. Steel is still needed in the major components which require strength or to sustain the weight of the tracked vehicle. The use of rubber significantly decreases the overall weigh of the tracked vehicle due to the specific gravity of rubber is 7 times lower than the specific gravity of steel. The reduced weight reduces the load of the engine which results in less fuel consumption.

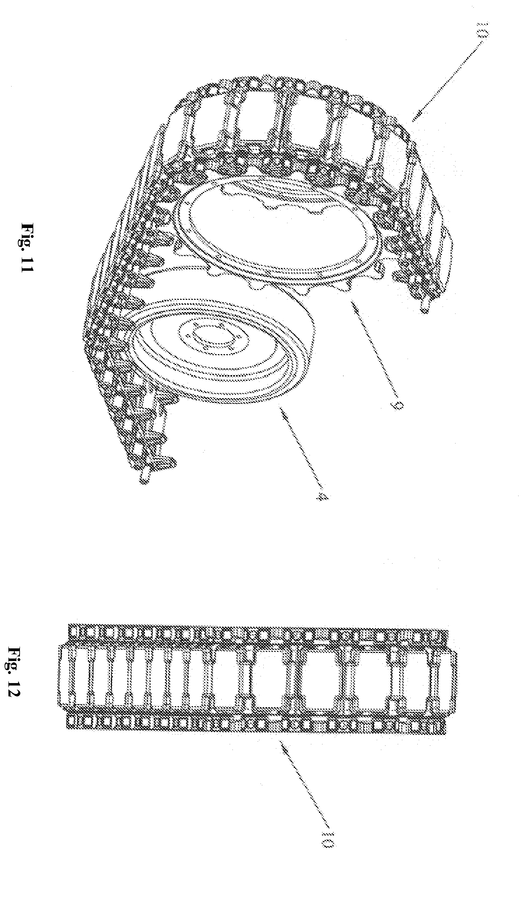

The track shoe assembly of the present invention is designed to be able to be partially manufactured part by part. Thus, a large forging machine is no longer required, only one having 1,200 tons forging force is enough. The manufacturing process has low investment and electricity consumption is greatly reduced during manufacture. In addition, when any part of the assembly wear out, only that part is replaced rather than all the track shoe assembly. For example, the present track shoe assembly is connected by using end connectors. The sprocket wheel drives the track at these end connectors (Figure 11). When an end connector wore out, only the wore out end connector is replaced rather than the entire set of the track shoe assembly. In a battle field, when failures and/or damages occur at any part of the assembly, only the failure and/or damage parts needed to be replaced. This means lower maintenance cost and less maintenance time consumption which is suitable for battle field operation.

The track shoe assembly of the present invention is a double-pin, having rubber bushing type. This design can reduce noise and vibration cause from the friction between the sleeves and the pins that joins each track shoe assembly altogether.

The road surface side of the rubber pad of the present track shoe assembly has a symmetrical, non-directional shape. When the vehicle moves forward or backward, therefore, the track shoe leaves the identical foot-prints on the road surface causing difficulty in tracing the movement of the tracked vehicle. In addition, due to the rubber pad is a renewable rubber pad type, there is no need to stock a large quantity of the entire set of the track shoe assembly. In the warfare scenarios only the rubber pad, the consuming part, has to be stocked. Since the road surface side of the rubber pad of the present track shoe assembly has a larger surface area than the surface area of the conventional track shoe assembly, the ground pressure acting on the road surface is reduced causing higher stability during the moving of the tracked vehicle. The performance on a concrete and/or an asphalt roads is improved and also causes less damage to the road surface.

### BRIEF DESCRIPTION OF THE DRAWINGS

Figure 1 shows a perspective view of a light tracked vehicle using a conventional track shoe assembly.
Figure 2 is the front view of the light tracked vehicle using the conventional track shoe assembly showed in figure 1.
Figure 3 shows another perspective view of the conventional track shoe assembly with a sprocket wheel and a road wheel.
Figure 4 is the front view of the conventional track shoe assembly assembled on a sprocket wheel.
Figure 5 is another perspective view of the conventional track shoe assembly. This figure shows the road wheel side of the track shoe assembly.
Figure 6 is another perspective view of the conventional track shoe assembly. This figure shows the road surface side of the track shoe assembly.
Figure 7 is an exploded perspective view of the conventional track shoe assembly.
Figure 8 is another exploded perspective view of the conventional track shoe assembly.
Figure 9 is the perspective view of a light tracked shoe vehicle using the track shoe assembly of the present invention.
Figure 10 is the front view of the light tracked shoe vehicle using the track shoe assembly of the present invention.
Figure 11 is a perspective view of the track shoe assembly according to the present invention with a sprocket wheel and a road wheel.
Figure 12 is the front view of the track shoe assembly according to the present invention with a sprocket wheel.
Figure 13 is another perspective view of the track shoe assembly according to the present invention. This figure shows the road surface side of the track shoe assembly with the rubber pad according to the present invention.
Figure 14 is another perspective view of the track shoe assembly according to the present invention. This figure shows the road wheel side of the track shoe assembly.
Figure 15 is an exploded perspective view of the track shoe assembly according to the present invention. This figure shows the road surface side of the track shoe assembly.
Figure 16 is another exploded perspective view of the track shoe assembly according to the present invention. This figure shows the road wheel side of the track shoe assembly.
Figure 17 shows a perspective view of the track shoe assembly according to the present invention. This figure shows the road wheel side of the track shoe assembly.
Figure 18 is another perspective view of the track shoe assembly according to the present invention. This figure shows the rubber pad side of the track shoe assembly.
Figure 19 is the front view of the track shoe assembly according to the present invention.
Figure 20 is the top view of the track shoe assembly according to the present invention. This figure shows the road wheel side of the track shoe assembly.
Figure 21 is the bottom view of the track shoe assembly according to the present invention. This figure shows the rubber pad installation surface of the track shoe assembly.
Figure 22 shows the side view of the track shoe assembly according to the present invention.
Figure 23 shows a perspective view of the track shoe body according to the present invention before rubberization. This figure shows the road wheel side.
Figure 24 shows another perspective view of the track shoe body according to the present invention before rubberization. This figure shows the rubber pad side.
Figure 25 is the front view of the track shoe body according to the present invention before rubberization.
Figure 26 is the top view of the track shoe body according to the present invention before rubberization. This figure shows the road wheel side.
Figure 27 is the bottom view of the track shoe body according to the present invention before rubberization. This figure shows the rubber pad installation side.
Figure 28 is the side view of the track shoe body according to the present invention before rubberization.
Figure 29 is an exploded perspective view of the track shoe body according to the present invention before rubberization. This figure shows the road wheel side.
Figure 30 is another exploded perspective view of the track shoe body according to the present invention before rubberization. This figure shows the rubber pad installation side.
Figure 31 shows a perspective view of the extension guided chassis according to the present invention. This figure shows the road wheel side.
Figure 32 shows another perspective view of the extension guided chassis according to the present invention. This figure shows the rubber pad installation side.
Figure 33 is the front view of the extension guided chassis according to the present invention.
Figure 34 is the top view of the extension guided chassis according to the present invention.
Figure 35 is the bottom view of the extension guided chassis according to the present invention.
Figure 36 is the side view of the extension guided chassis according to the present invention.
Figure 37 is a sectional view taken along line 37-37 of the extension guided chassis according to the present invention shows in figure 34.
Figure 38 is a sectional view taken along line 38-38 of the extension guided chassis according to the present invention shown in figure 34.
Figure 39 is a perspective view of the rubber pad for the track shoe assembly according to the present invention. This figure shows the installation side of the rubber pad.
Figure 40 is a perspective view of the rubber pad for the track shoe assembly according to the present invention. This figure shows the road surface side of the rubber pad.
Figure 41 is the front view of the rubber pad for the track shoe assembly according to the present invention.
Figure 42 is the top view of the rubber pad for the track shoe assembly according to the present invention.
Figure 43 is the bottom view of the rubber pad for track shoe assembly according to the present invention.
Figure 44 is the side view of the rubber pad for the track shoe assembly according to the present invention.
Figure 45 is a perspective view of the formed steel plate according to the present invention before rubberization. This figure shows the side confronts with the track shoe assembly
Figure 46 is another perspective view of the formed steel plate according to the present invention before rubberization. This figure shows the rubberized side.
Figure 47 is the front view of the forged steel body according to the present invention before rubberization.
Figure 48 is the top view of the formed steel plate according to the present invention before rubberization.
Figure 49 is the bottom view of the formed steel plate according to the present invention before rubberization.
Figure 50 is the side view of the formed steel plate according to the present invention before rubberization.
Figure 51 is a sectional view taken along line 51-51 of the formed steel plate according to the present invention shown in figure 52.
Figure 52 is a bottom view showing the inner cross section of the formed steel plate according to the present invention.
Figure 53 is a sectional view taken along line 53-53 of the formed steel plate according to the present invention shown in figure 52.
Figure 54 is a sectional view taken along line 54-54 of the formed steel plate according to the present invention shown in figure 52.
Figure 55 is a sectional view taken along line 55-55 of the formed steel plate according to the present invention shown in figure 52

### DETAIL DESCRIPTION OF THE PREFERRED EMBODIMENTS

With reference to figures 1 and 2, the light tracked vehicle 1 using the conventional track shoe assembly 2. The suspension system of the light tracked vehicle comprises of the conventional track shoe assembly 2, a sprocket wheel 3 and a road wheel 4.

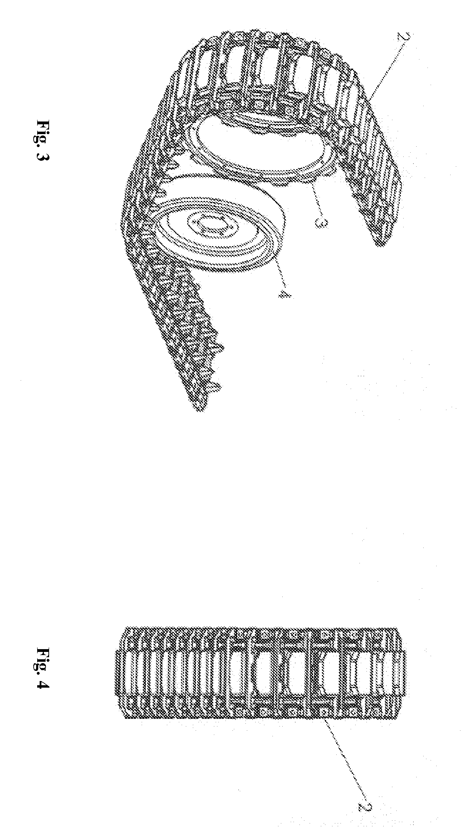

Figures 3 and 4 show the conventional track shoe assembly 2 wound around the said sprocket wheel 3 and the said road wheel 4. The movement of the track begins from the transmission of power from the engine to the sprocket wheel 3. The sprocket wheel 3 then drives the track shoe assembly 2 at the space between two adjacent track shoe assembly.

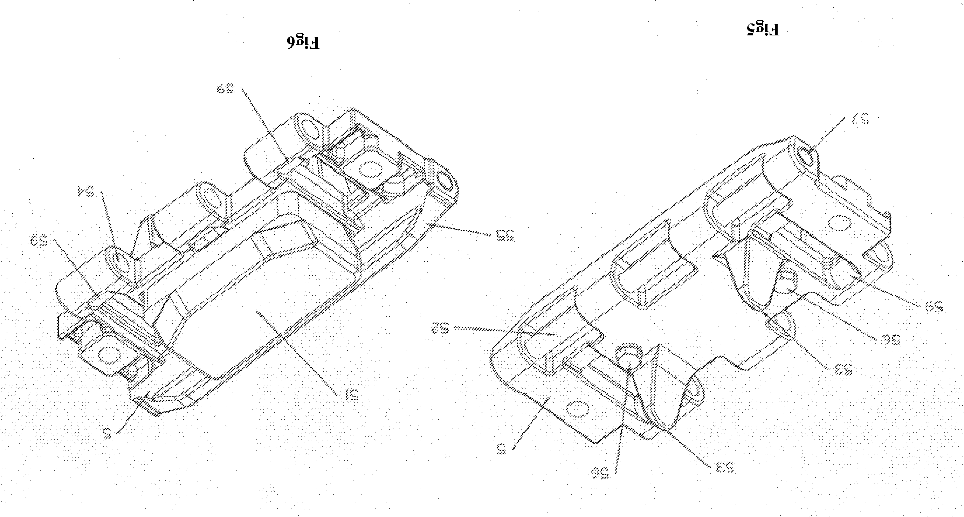

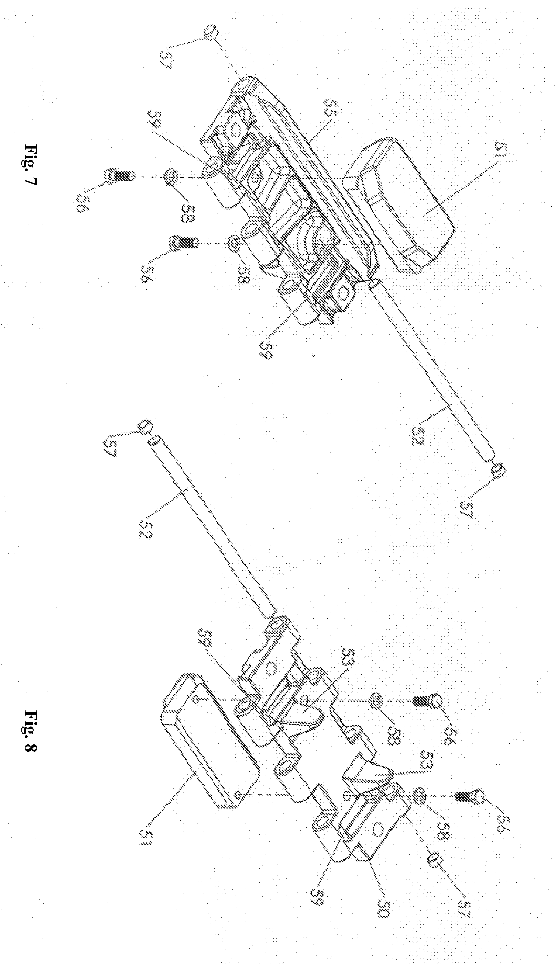

Figures 5-8 illustrate a conventional double guide, single pin having no rubber bushing type track shoe assembly. This type of track shoe assembly comprises of track shoe body 5, rubber pad 51, and pin 52. The pin 52 is inserted through the hole 54 of the track shoe body 5 and the hole 54 of the adjacent track shoe body 5. Two fix rings 57 are installed at both ends of the pin 52 in order to maintain the pin 52 to stay in the hole 54. The pin 52 acts as a connector that joins two adjacent track shoe assemblies together. The rubber pad 51 is fixed to the track shoe body 5 by two fixing screws 56 that are fixed in place by spring rings 58.

The track shoe body 5 comprises of two track guides 53, two track holes 59, and grouser 55. The track guide 53 supports the road wheel and is the part that rub against the road wheel. The track hole 59 is the part that the teeth of the sprocket wheel project through and is also the part that rubs against the teeth of the sprocket wheel. The function of the grouser 55 is to maintain the rubber pad 51 to be in the socket of the track shoe body 5.

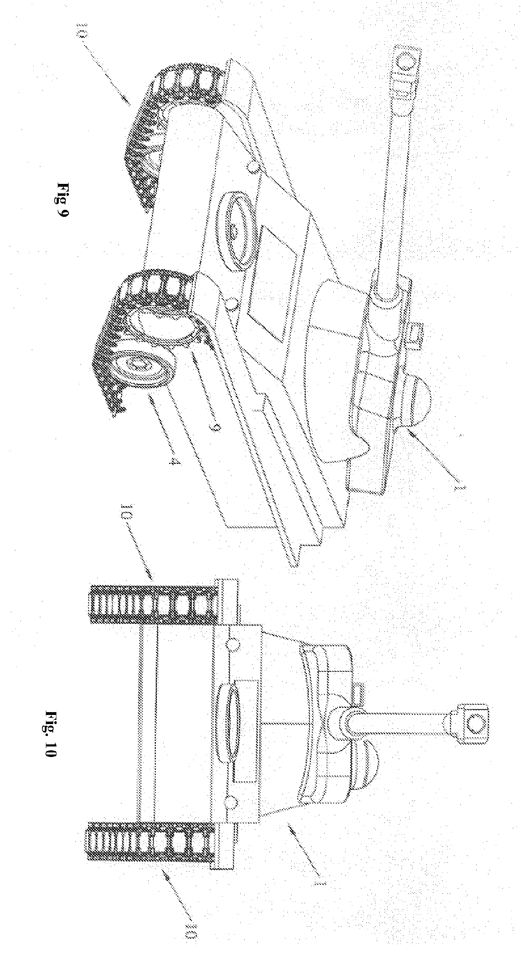

Figures 9-10 show a light tracked vehicle 1 employing the track shoe assembly 10 according to the present invention.

The suspension system of the light tracked vehicle 1 comprises of the track shoe assembly 10 according to the present invention, a sprocket wheel 9, and road wheel 4 that presses between the central region of the track guides.

Figures 11-12 show the track shoe assembly 10 according to the present invention, a sprocket wheel 9, and road wheel 4. The operation of the track begins from the transmission of power from the engine to the sprocket wheel 9. Then the sprocket wheel 9 drives the track shoe assembly 10 at the end connector 153.

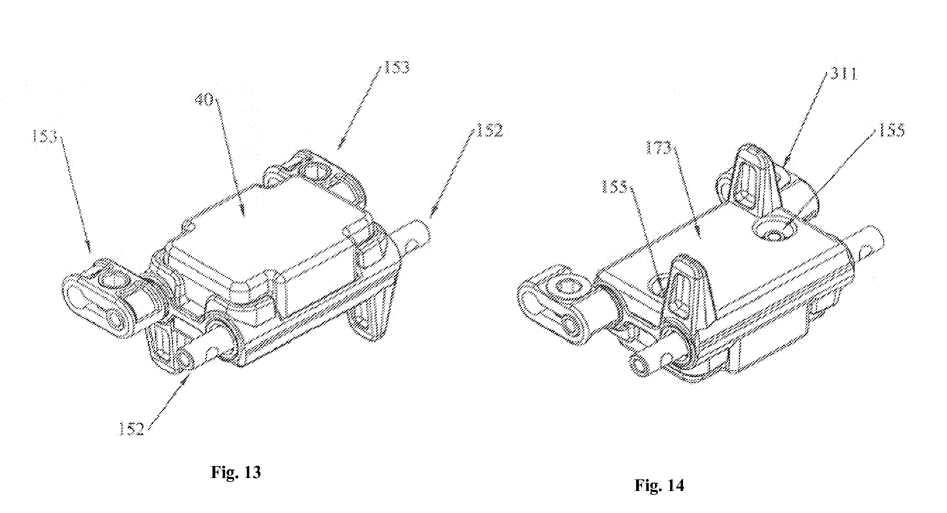

Figures 13-14 show a complete set of a double guide, double pin with rubber bushing type tracked track shoe with replaceable rubber pad according to the present invention. This assembly is ready to install the end connector 153 to connect with the pin 152 of the adjacent track shoe assembly. The part that touch the ground is the rubber pad 40 and the part that is pressed by the road wheel is the surface 173 of the track shoe assembly.

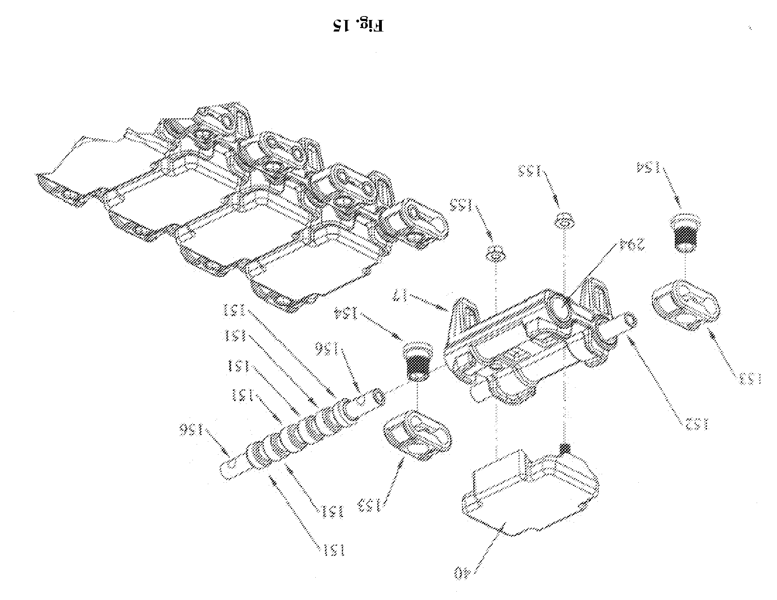

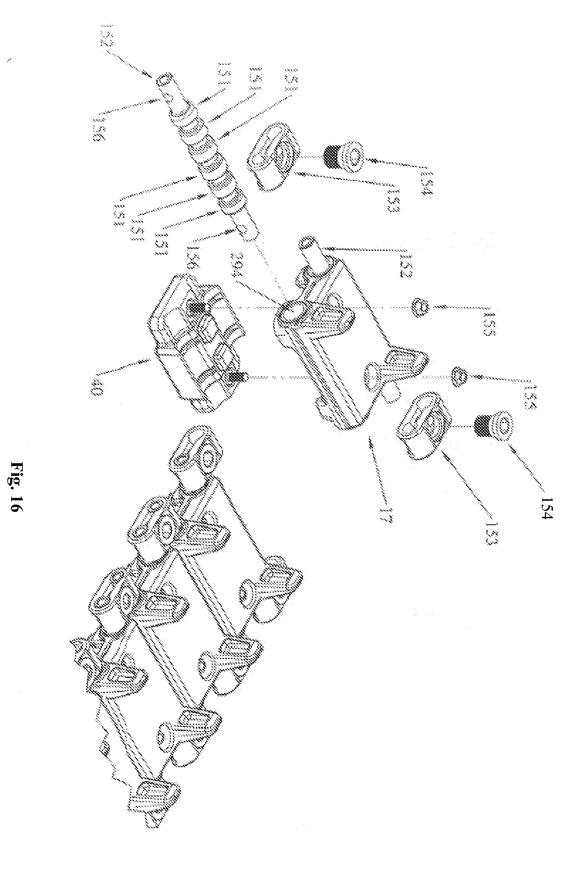

Figures 15-16 show an exploded perspective view of the track shoe assembly according to the present invention. The track shoe assembly according to this embodiment is assembled by inserting the pin 152 through the hole 294 of the track shoe body 17. The inside diameter of the hole 294 is slightly smaller than the outside diameter of the rubber bushing 151 in order to fit and fix the pin 152 inside the hole 294, thus attenuating the vibration generates from the movement of the track. Both ends of the pin 152 are installed with end connectors 153 and fixed in place with screw 154 that is inserted through the semicircular holes 156 provided at both ends of the pin 152. The screw 154 prevents the end connector 153 from slipping off the pin 152. The rubber pad 40 is fixed to the track shoe body 17 via two fixing bolts 155.

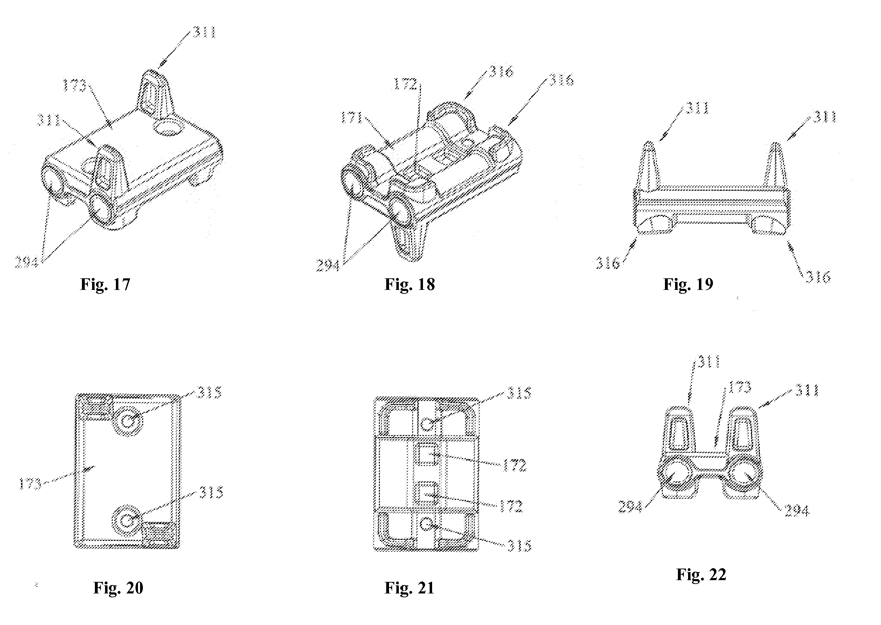

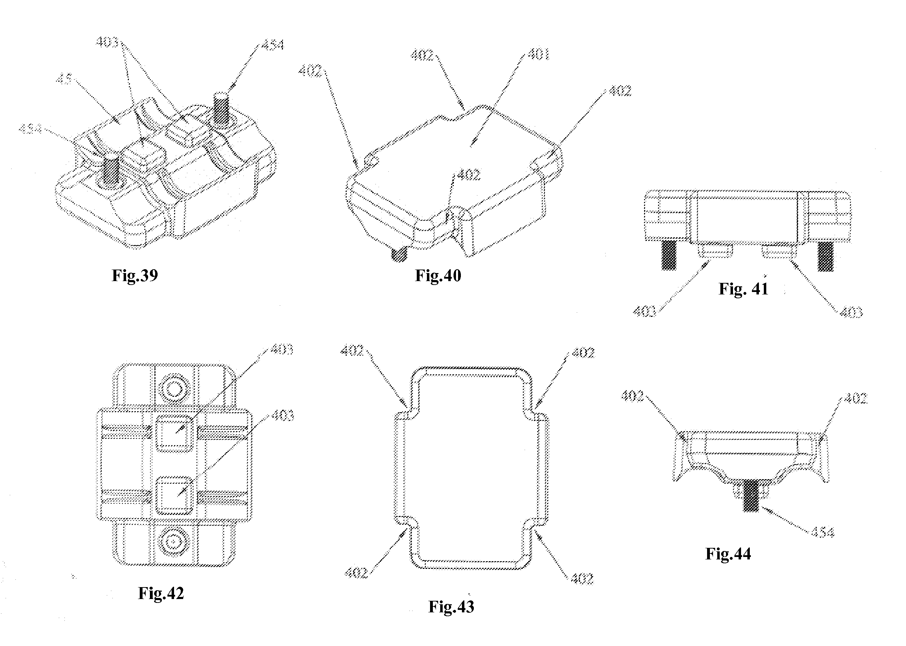

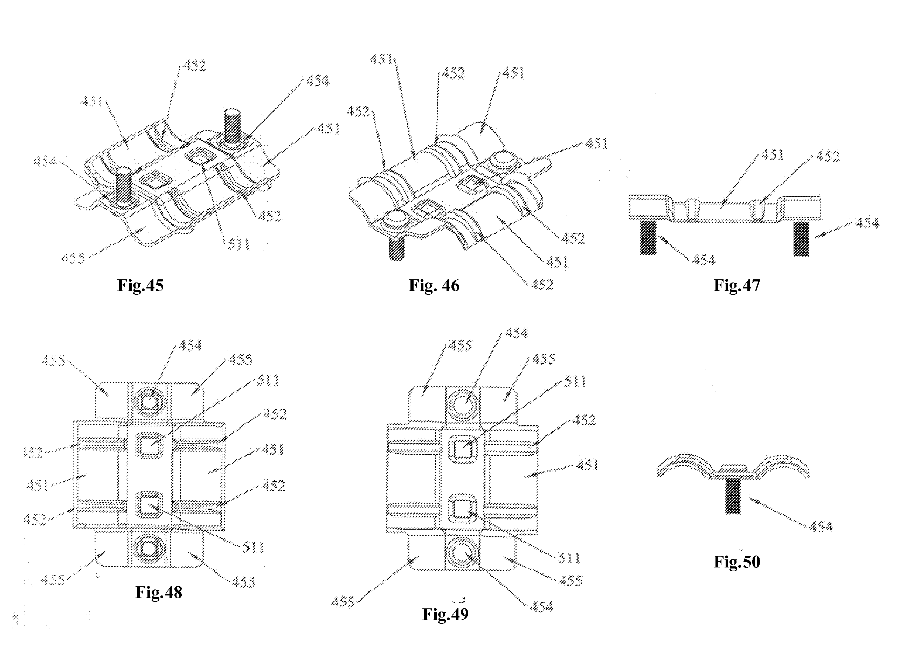

Figures 17-22 show the track shoe body of the present invention 17 after rubberization. The track shoe assembly on the road wheel side comprises of two track guides 311 locate diagonally to guide the road wheel. The road wheel support rubber pad 173 to support the road wheel 4. The road wheel support rubber pad 173 has two through holes 315 on both left and right sides. The through holes 315 are provided to allow the fixing screws of the rubber pad 40 to pass through. The ground contact surface of the track shoe assembly comprises of four curve walls 316 at each corner of the track shoe assembly to limit the fixing space of the rubber pad. The curve 171 is provided for supporting a formed steel plate (figure 50) in order to allow the track supporting rubber pad (figure 39) to be fixed. The track shoe body has two through holes 294 along the length of the track shoe body 17. These two through holes are provided for the insertion of the pins 152 and the rubber bushings 151.

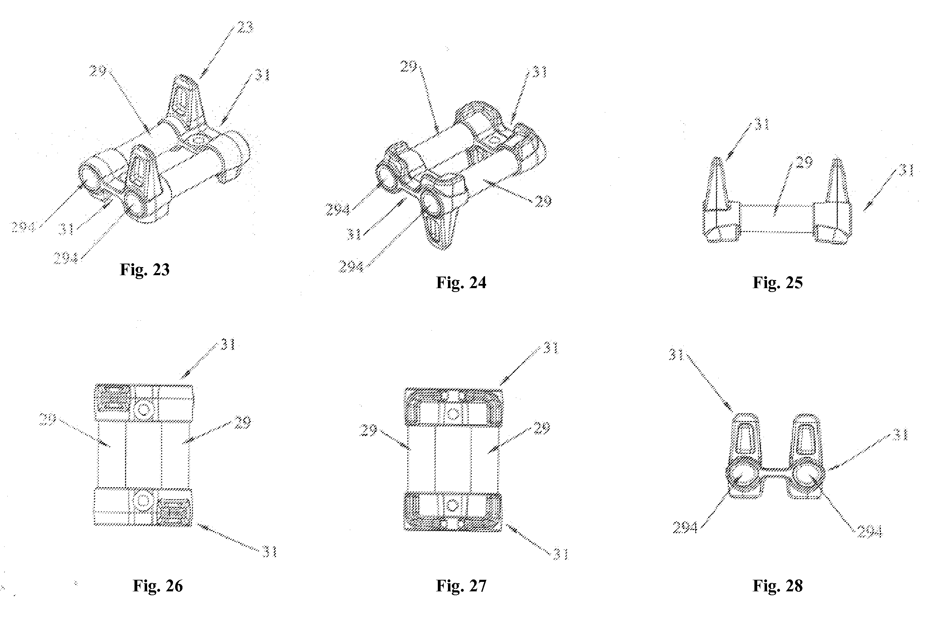

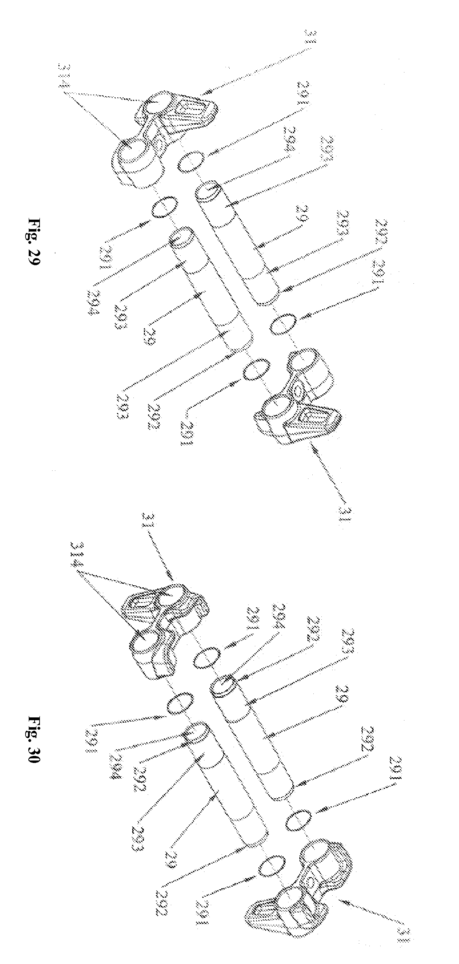

Figures 23 to 30 show the track shoe body 17 and exploded perspective views before rubberization. The track shoe body in figures 29 and 30 comprises of two steel tubes 29 and two extension guided chassis 31. The extension guide chassis 31 will cover in a reverse manner the ends of the steel tubes 29 that are inserted through the holes 314. Then the ends 292 of the steel tube 29 are expanded and brazed with copper ring 291 to fix the steel tube to the extension guided chassis.

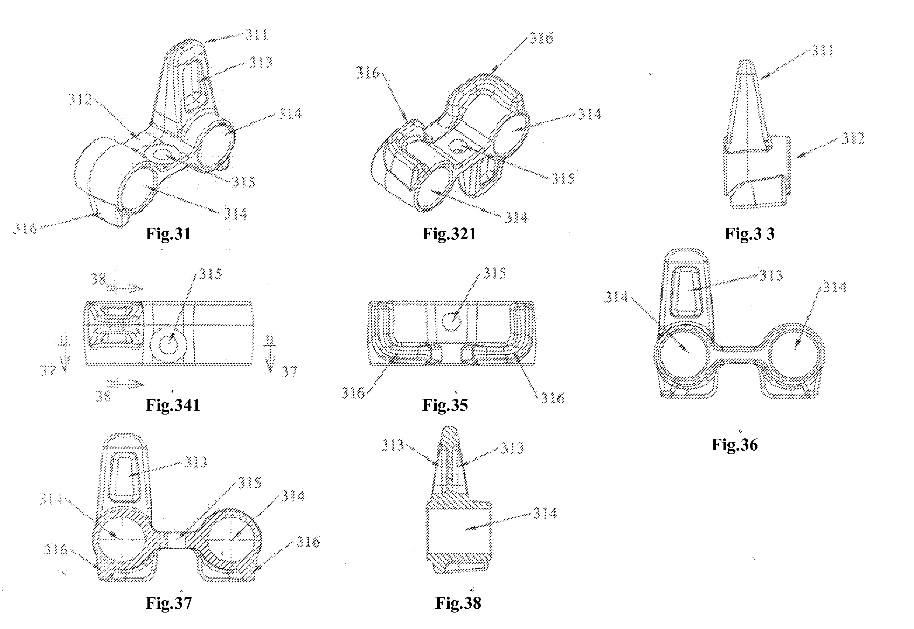

Referring to figures 31-38, the extension guided chassis 31 can be divided into two sections i.e. the guide member 311 and the steel body 312. The guide member 311 has pyramid shape with two recesses 313 on both surfaces to reduce friction between the guide member and the wall of the road wheel. The steel body 312 has two 314 holes to allow the steel tube 293 to pass through. The hole 315 is provided to allow the fixing screw 454 of the rubber pad 40 to pass through. In addition, a steel frame 316 is also provided to catch the rubber pad 40 at the corners 402.

Referring to figures 39-44, the rubber pad comprises of the outer surface 401, rubber projections 403, formed steel plate 45 and bolts 454. The outer surface 401 has a cross shape with reduced size at all four corners 402 in order to fit with the corresponding steel frame 316. The rubber projection 403 has a square shape with the size corresponds to the size of the rubber socket 172. The rubber projections 403 act as fixers for the rubber pad 40 to the formed steel plate 45 if the adhesion between the rubber pad and the formed steel plated is fail.

Figure 45-50 show the formed steel plate. The formed steel plate is a rectangular steel plate cut at all four corners to fit with the steel frame 316. Then the steel plate is formed to have double arches 451 that can fit with the curve of the curve 171 of the track shoe body. The recesses 452 are provided to give additional strength for the formed steel plate. At the ends of the formed steel plate, two fixing screws 454 are fixed. Holes 511 are also provided to allow the rubber projection 403 to be inserted from the back of the formed steel plate.

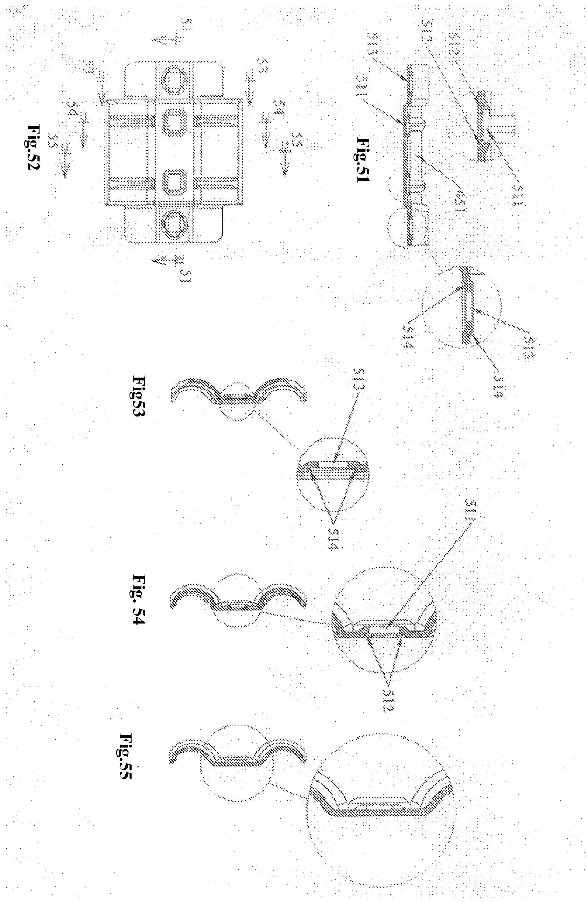

Figures 51-55 show the sectional view of the formed steel plate of figure 45. The square through holes 511 are formed by punching the steel plate to become recesses 512 in the direction oppose to the inserting direction of the rubber projection 403. The screw holes 513 are also formed by punching the steel plate to become recesses 514 in order to provide additional strength for the steel plate and for the permanent fixing of the square head screws 454.

## Claims

1. A double guide, double pin having rubber bushing type with replaceable rubber pad track shoe assembly for light tracked vehicle. The said track shoe assembly comprises of track shoe body (17), rubber pad (40), end connector (153), and pin with rubber bushing (152). The said track shoe body (17) is made from steel frame and rubberized. Two guide members (311) project beyond the rubber pad covering the track shoe body (17) at the diagonal corner of the track shoe body (17). The pin with rubber bushing (152) is inserted through the hole of the track shoe body (17) and fixed to the adjacent track shoe body (17) with the end connector (153). Both ends of the pin (152) are installed with the end connectors (153) and fixed in place with screw (154) that is inserted through the holes (156) provided at both ends of the pin (152). The screw (154) prevents the end connector (153) from slipping off the pin (152).
The present track shoe assembly for light tracked vehicle is driven by a sprocket wheel (9) which drives the track shoe assembly at the end connector (153). Each component of the present track shoe assembly is separately manufactured, thus only the wear out part has to be replaced.
The track shoe assembly of the present invention has the following characters :
- The track shoe body before rubberization comprises of two steel tubes (29) and two extension guided chassis (31). The said two steel tubes (29) lay parallel to each other. The extension guide chassis (31) cover in a reverse manner the ends of both steel tubes (29).
The extension guided chassis (31) is divided into two sections i.e. the guide member (311) and the steel body (312). The steel body (312) is made from solid steel having two holes (314) to allow the steel tube to pass through the entire length of the track shoe body (17). A small hole (315) is provided to allow the fixing screw (454) of the rubber pad (40) to pass through in the direction vertical to the track shoe body (17). Steel frames (316) are provided at all four corners on the ground contacting surface side. The guide member (311) has a pyramid shape with the base has thickness more than the apex. There are two recesses (313) on both surfaces of the guide member to reduce friction between the guide member and the wall of the road wheel and the load of the engine.

2. The track shoe assembly for light tracked vehicle of claim 1, wherein the formed steel plate (45) is formed to have double arches (451) and recesses (452) to give additional strength for the formed steel plate. The curvature of the arches (451) can fit with the curve (171) of the track shoe body. There are holes at both ends of the formed steel plate for the permanent fixing of fixing screws (454). Two holes (511) are also provided in the central region of the formed steel plate to allow the rubber to flow through and form square projections (403) on the other side of the formed steel plate. The rubber projections (403) act as fixers for the rubber pad to the formed steel plate if the adhesion between the rubber pad and the formed steel plate is fail.

3. The track shoe assembly for light tracked vehicle of claim 1, wherein the rubber pad (40) has a cross shape by reducing the width at all four corners of the rubber pad in order to fit the space limited by the steel frame (316) at all four corners.
